# EUROPEAN PATENT SPECIFICATION

(11) **EP 3 055 588 B1**
(45) Date of publication and mention of the grant of the patent: **15.04.2020**
(21) Application number: 14796235.1
(22) Date of filing: 07.10.2014
(51) Int. Cl.: F16H 57/08

(54) **GEAR MOUNTINGS**
GETRIEBEHALTERUNGEN
MONTURES D'ENGRENAGE

(30) Priority: 08.10.2013 GB 201317809
(43) Date of publication of application: 17.08.2016
(73) Proprietor: Involution Technologies Limited, Leamington Spa, Warwickshire CV34 6BF (GB)
(72) Inventor: HICKS, Ray, Leamington Spa Warwickshire CV34 6BF (GB)
(74) Representative: Barker Brettell LLP
(86) International application number: PCT/GB2014/053018
(87) International publication number: WO 2015/052504

(56) References cited:
- EP-A1- 0 003 894
- EP-A1- 0 093 584
- WO-A1-2005/050058
- WO-A2-2008/068260
- GB-A- 2 413 836

## Description

This invention relates to gear mountings, a gear using such a mounting, a gear system using such a gear and a turbine, such as a wind turbine, using such a gear system.

It is known to provide an epicyclic gearing, where a plurality of planet gears mounted on a planet carrier mesh with a single sun gear generally within the planet gears and an annular gear surrounding the planet gears. For particularly high torque applications, such as wind turbines, it has been proposed (for example, in the European Patent Application published as EP 0 003 894) to mount the planet gears on the carrier by means of a flexible pin. This allows some radial movement of the planet gears relative to their carrier and relative to their axis of rotation, and allows the planet gears to move so that they are meshed evenly with the sun and annular gears along the length of their teeth. This reduces wear and increases the life of such a gear system.

However, we have appreciated that such a mounting means that the location of the pin in the carrier is subject to significant bending moments, and requires a substantial pin and carrier. Furthermore, it is always desirable to decrease the size of a gear system that can handle a given load.

WO 2005/050058 A1 discloses a planetary-type gear transmission unit suitable for a wind turbine. The planet-carrier comprises a bogie plate which supports and locates circumferentially-spaced pairs of planet gears. The planet gears are affixed to the bogie plate by a shaft which is flexible to allow radial movement of the planet gears.

According to the invention, there is provided a gear mounting, comprising a carrier having two opposing faces and at least one pair of spindles, each pair of spindles comprising a spindle on each face of the carrier, the spindles extending in opposing directions away from the carrier along an axis, in which the spindles are mounted on the carrier so as to be capable of radial movement relative to the axis, characterised in that each spindle comprises a tube positioned along the axis, each tube flexes in order to resist radial movement of the spindle, and in which there is provided a common inner member for each pair which passes through the tube of each spindle and the carrier and acts to compress the spindles against the carrier.

Thus, when used in an epicyclic gear as a support for the planet gears, the tube can provide resistance against radial movement of the planet gears, whilst the common inner member means that the carrier will not be subject to a substantial bending moment, as the bending moment from each pair of spindles will largely cancel out.

Typically, the inner member of each pair will act to axially compress the tubes of each spindle of that pair. The inner member may be a tension bolt. There may be provided a housing for each spindle, and the tension bolt may have two ends; each end of the tension bolt may act on the housing of one spindle of its pair, typically at an end of the spindle distal from the carrier. Typically, the housing will act to compress the tube.

The tube may have a radial profile comprising a narrower section axially between two wider ends. This has the effect of allowing the tube to deflect along its length by complimentary elastic rotation of each end face of the tube.

Each spindle may be provided with, or may provide a seat for, a bearing; typically, the bearing or seat will be on a radially outer surface of the spindle. There may be provided a gear on each bearing, arranged for rotation relative to the spindle about the axis. Thus, this invention provides a convenient planetary gear carrier with planetary gears for an epicyclic gear.

According to the invention, there is provided a dual epicyclic gear, comprising a gear mounting in accordance with the first aspect of the invention, the carrier of the gear mounting forming a common planet carrier of the dual epicyclic gear, the dual epicyclic gear further comprising a sun gear, an annular gear for each face of the carrier and planet gears for each spindle of the gear mounting, in which for each face of the carrier, the sun gear and the annular gear both mesh with the planetary gears on that face of the carrier.

According to the invention, there is provided a gear system comprising a housing, an input, an output, a first epicyclic gear and a second epicyclic gear, in which the first epicyclic gear has a annular gear, a plurality of planetary gears each meshing with the annular gear and supported by a common planet carrier and a sun gear meshing with each planetary gear and the second epicyclic gear is a dual epicyclic gear in accordance with the second aspect of the invention, in which the input and the output are each coupled to one of the first and second epicyclic gears and the first and second epicyclic gears are coupled to each other.

In one embodiment:
- the input is coupled to the annular gear of a first face of the second epicyclic gear and to the planet carrier of the first epicyclic gear;
- the common planet carrier of the second epicyclic gear is fixed rotationally relative to the housing;
- the sun gears of the first and a second face of the second epicyclic gear are both coupled to the annular gear of the first epicyclic gear;
- the annular gear of the second face of the second epicyclic gear is coupled to the planet carrier of the first epicyclic gear; and
- the sun gear of the first epicyclic gear is coupled to the output.

This provides a relatively compact gear system, which can achieve a high power density at an acceptable gear ratio. Furthermore, as the common planet carrier is connected to the housing (in the vernacular, "grounded"), there is no need to attempt to input our extract high torques from what could be, where there are many planetary gears involved, a densely populated planet carrier. Torque can be extracted radially from the outer edge of the carrier.

There may be a third epicyclic gear coupled to the first and second epicyclic gears. In one embodiment:
- the input is coupled to the planet carrier of the first epicyclic gear and to the common planet carrier of the second epicyclic gear;
- the annular gear of the first epicyclic gear is coupled to the sun gear of the third epicyclic gear;
- the planet carrier of the third epicyclic gear and the annular gear of a first face of the second epicyclic gear are fixed rotationally relative to the housing;
- the annular gear of the third epicyclic gear is coupled to both sun gears of the second epicyclic gear;
- the annular gear of a second face of the second epicyclic gear is coupled to the planet carrier of the third epicyclic gear; and
- the output is coupled to the sun gear of the first epicyclic gear.

This case is particularly well suited for use where the gear system is to be housed within the rotating shaft of a turbine, such as a wind turbine. In such a case, the input can be the rotating shaft of a turbine, and the housing can be a housing of the turbine, with the rotating shaft rotating relative to the housing. Whilst torque is input to the planet carrier of the second epicyclic gear, because that then simple needs to be coupled to the rotating shaft in which it is housed, this is again a relatively simple connected.

In a further embodiment:
- the input is coupled to the annular gear of a first face of the second epicyclic gear and to the planet carrier of the third epicyclic gear;
- the annular gear of a second face of the second epicyclic gear is coupled to the planet carrier of the third epicyclic gear;
- the common planet carrier of the second epicyclic gear and the annular gear of the first epicyclic gear are both rotationally fixed relative to the housing;
- both sun gears of the second epicyclic gear are coupled to the annular gear of the third epicyclic gear;
- the sun gear of the third epicyclic gear is coupled to the planet carrier of the first epicyclic gear; and
- the output is coupled to the sun gear of the first epicyclic gear.

This embodiment is well suited to being installed within a fixed spindle of the housing of a turbine, such as a wind turbine. In such a case, the spindle would fit within a rotor of the turbine, with the rotor being coupled to the input, and the spindle forming the housing of the gear system. Again, in such a case, it is easy in such a case to fix the common planet carrier relative to the housing in which it is housed.

In another embodiment:
- the input is coupled to the annular gear of a first face of the second epicyclic gear and to the planet carrier of the first epicyclic gear;
- the common planet carrier of the second epicyclic gear is fixed rotationally relative to the housing;
- both sun gears of the second epicyclic gear are coupled to the planet carrier of the third epicyclic gear;
- the annular gear of a second face of the second epicyclic gear is coupled to the annular gear of the third epicyclic gear and to the planet carrier of the first epicyclic gear;
- the sun gear of the third epicyclic gear is coupled to the annular gear of the first epicyclic gear;
- the output is coupled to the sun gear of the first epicyclic gear.

Again, this embodiment is well suited to being installed within a spindle of the housing of a turbine, such as a wind turbine. In such a case, the spindle would fit within a rotor of the turbine, with the rotor being coupled to the input, and the spindle forming the housing of the gear system. Again, in such a case, it is easy in such a case to fix the common planet carrier relative to the housing in which it is housed.

Where we have discussed the various gears being "coupled" we will generally refer to rotational motion being coupled between the gears in question, typically with no gear ratio applied.

According to the invention, there is provided a turbine, comprising a rotor and a gear system according to the third aspect of the invention, in which the rotor is coupled to the input of the gear system.

Typically, the turbine will also comprise a generator, coupled to the output of the gear system. This could be coupled directly or by additional epicyclic gears to increase the speed.

The rotor may be provided with blades; the passage of fluid, such as air, over the blades may exert a torque on the rotor so as to cause it to turn.

The turbine may comprise a housing supporting the rotor for rotational movement relative to the housing. The rotor may have an rotating shaft, which is received within the housing; in such a case, the gear system can be provided within the rotor. Alternatively, the housing may be provided with a spindle over which the rotor is mounted; in this case, the gear system can be provided within the spindle.

There now follows, by way of example only, description of embodiments of the invention, described with reference to the accompanying drawings, in which:
**Figure 1** shows a cross section through a gear mounting in accordance with a first embodiment of the invention;
**Figures 2 to 5** show schematically gear arrangements in accordance with, respectively, second to fifth embodiments of the invention.

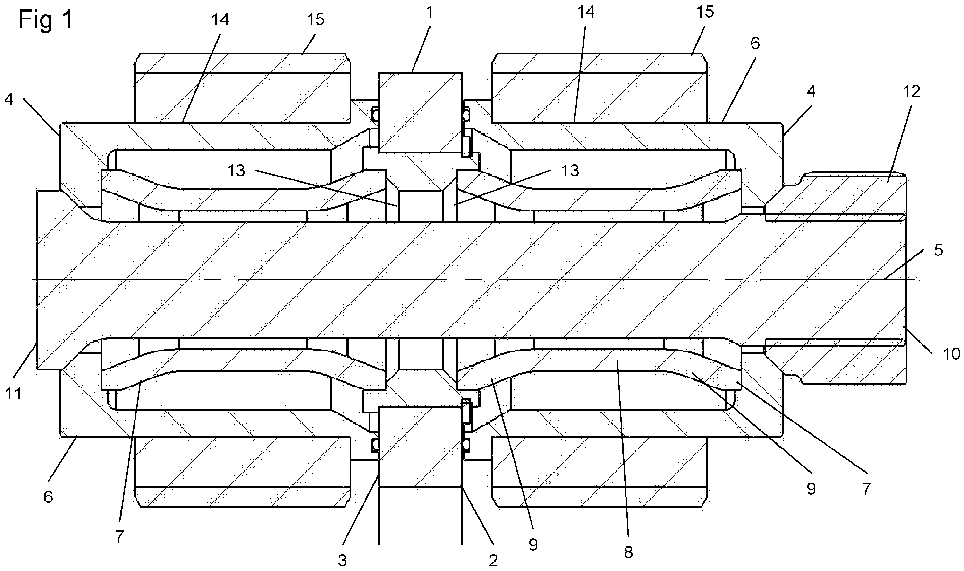

Figure 1 of the accompanying drawings shows a gear mounting in accordance with a first embodiment of the invention, which can be used in an epicyclic gear. In this embodiment, a common planet carrier 1 is provided, of the form of a generally circular plate, having opposing first 2 and second 3 faces.

The gear mounting is also provided with a plurality of pairs of spindles 4; only one such pair is shown in Figure 1. Typically, there may be at least three, but typically eight to twelve or more pairs.

Taking the pair shown in Figure 1 as an example, each pair comprises two spindles 4 extending away from the carrier from opposing faces and in opposing directions along an axis 5 perpendicular to the carrier 1. Each spindle comprises an outer housing 6 surrounding a tubular member 7. The outer housing 6 is generally cylindrical in form, and holds the tubular member 7 against the carrier. The tubular member 7 is broadly hourglass in shape, in that it has a central section 8 that is narrower in radius relative to the axis 5 between two wider portions 9 that increase in radius as the tubular member extends along the axis away from the central section 8. The tubular members 7 each rest in a circular depression 13 in the carrier, and so are held captive between the outer housing 6 and the carrier.

A common inner member 10 is provided which passes through both spindles 4 of the pair and the carrier 1. In doing so, it passes through the bore of each tubular member 7 and through each outer housing 6. The inner member 10 is of the form of a nut and bolt, in that the inner member 10 has a head 11 at one, which engages the outer housing 6 of one spindle 4, and prevents the inner member 10 passing through the outer housing 6, and a threaded nut 12 at the other, which prevents the inner member 10 passing through the outer housing 6 of the other spindle 4. As such, tensioning the nut 12 on the inner member 10 will bias the outer housings 6 against the carrier 1. In turn, each outer housing 6 will act to compress the corresponding tubular member 7.

The outer housing 6, having a cylindrical outer surface, also provides a seat 14 for a bearing (not shown) on which a planetary gear 15 of the epicyclic gear is mounted. Thus, each planetary gear 15 is free to rotate around the axis 5. However, each tubular member 7 will allow its spindle 4 to move radially relative to the axis 5 (and so parallel to the carrier 1). The tubular member 7 will exert a reaction force against such movement, so as to bias the planetary gear 15 back into a neutral position in a manner akin to a spring.

However, because each spindle is provided as part of a pair with a common inner member 10, the bending moment on the carrier from each spindle 4 will substantially cancel out, leaving only a shear loading. This means that, not only can the planet carrier 1 carry twice the torque (and hence be made more compact for use at a given torque), as there are provided planet gears 15 on both sides, but the planet carrier 1 can be made thinner and/or lighter as it is no longer required to support a significant bending moment.

As such, the gear mounting of this embodiment can be used to form a double-sided epicyclic gear, in which the planet carrier 1 with its plurality of planets on both sides is provided with a sun gear and an annular gear for each face of the carrier, in which for each face of the carrier, the sun gear and the annular gear both mesh with the planetary gears on that face of the carrier and are mounted for rotation about an axis parallel to the axes 5 of the pairs of spindles 4.

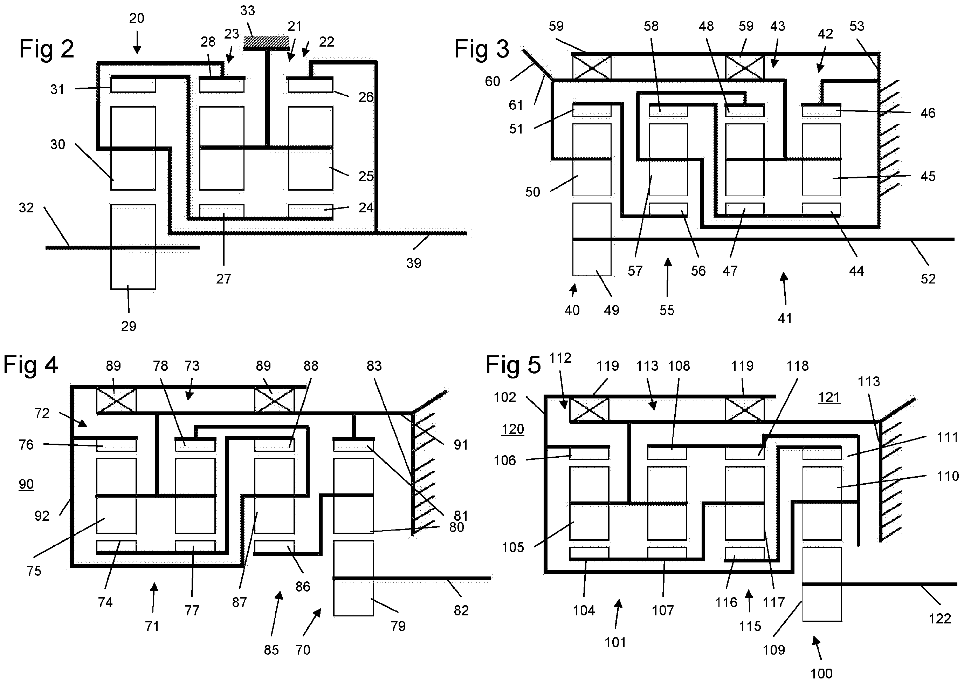

The use of this double-sided epicyclic gear will be demonstrated in the following embodiments. Each of these embodiments is used in a wind turbine, and as such connects a rotor of the wind turbine to a generator. Starting with the second embodiment of the invention shown in Figure 2, a first epicyclic gear 20 of standard construction is used along side a second epicyclic gear 21 in accordance with the first embodiment of the invention. In this embodiment:
- an input 39 is coupled to the annular gear 26 of a first face 22 of the second epicyclic gear 20 and to the planet carrier 30 of the first epicyclic gear 29;
- the common planet carrier 25 of the second epicyclic gear 21 is fixed rotationally relative to a housing 33 of the turbine;
- the sun gears 24, 27 of the first 22 and a second 23 face of the second epicyclic gear 21 are both coupled to the annular gear 30 of the first epicyclic gear 29;
- the annular gear 28 of the second face 23 of the second epicyclic gear 21 is coupled to the planet carrier 30 of the first epicyclic gear 20; and
- the sun gear 29 of the first epicyclic gear 20 is coupled to an output 32 coupled to the generator.

Thus, the second epicyclic gear 21 is used in the high torque stage of a gear system that allows the low speed, high torque input from the rotor to be converted to a lower torque, higher speed output suitable for using to generate electricity or the like, using the first epicyclic gear as a differential gear.

Analysing the typical ratios used in this application, for every unit of torque at the output 32 there will be:
- three units of torque at the planet carrier 20 of the first epicyclic gear;
- two units of torque at the annular gear 31 of the first epicyclic gear, which is split into one unit of torque each at the annular gears 24, 27 of the second epicyclic gear 21;
- three units of torque at the common planet carrier 25 of the second epicyclic gear 21;
- two units of torque at each of the annular gears 26, 28 of the second epicyclic gear 21.

Thus, the torque at the input 39 required to generate one unit of torque at the output 32 is the sum of that on the annular gears 26, 28, of the second epicyclic gear 21 (two units, twice) and that on the planet carrier 30 of the first epicyclic gear 20 (three units), for a total of seven. Thus, a gear ratio of 7 is achieved, in a particularly small package. Furthermore, because no torque is introduced at the common planet carrier 25, there is no need for an additional flange to transmit torque to or from the common planet carrier 25 via highly stressed webs which would reduce the number of planets possible and add appreciable weight.

Including a third epicyclic gear can further increase the gear ratio without an excessive increase in size of the gear system. This is demonstrated in the following embodiments. In the third embodiment of the invention, depicted in Figure 3 of the accompanying drawings, equivalent features to those of the second embodiment have been assigned the same reference numerals, raised by 20.

In this embodiment, a third epicyclic gear 55 of standard construction is employed. Furthermore, the gear system is installed within the rotor 60 of the turbine, with the rotor 60 being received within the housing 53 of the turbine on bearings 59; the rotor 60 of such turbines - especially high power turbines of more than 3 megawatts, certainly 10 MW upwards - is sufficiently large to accommodate this gear system.

In this embodiment:
- the input 61 from the rotor 60 is coupled to the planet carrier 50 of the first epicyclic gear 40 and to the common planet carrier 45 of the second epicyclic gear 41;
- the annular gear 51 of the first epicyclic gear 40 is coupled to the sun gear 56 of the third epicyclic gear 55;
- the planet carrier 57 of the third epicyclic gear 55 and the annular gear 46 of a first face 42 of the second epicyclic gear 41 are fixed rotationally relative to the housing 53;
- the annular gear 58 of the third epicyclic gear 55 is coupled to both sun gears 44, 46 of the second epicyclic gear 41;
- the annular gear 48 of a second face 43 of the second epicyclic gear 41 is coupled to the planet carrier 57 of the third epicyclic gear 55; and
- the output 52 is coupled to the sun gear 49 of the first epicyclic gear 40 and onwards to the generator.

In this case, again, as the gear system is within the rotor 60, it is relatively simple to connect the common planet carrier 45 to the rotor 60, as it is within the rotor 60; there is no need for the use of webs or the like as described above as inconvenient.

In this case, for a single unit of torque at the output 40, there will be:
- six units at the planet carrier 50 of the first epicyclic gear 40;
- five units at the annular gear 51 of the first epicyclic gear 40 (transferred to the sun gear 56 of the third epicyclic gear 55);
- twelve units at the both the planet carrier 57 and the annular gear 58 of the third epicyclic gear 55, the torque at the annular gear 58 being split and transmitted to the sun gears 44, 47 of the second epicyclic gear 41; and
- 34 units at the common planet carrier 45 of the second epicyclic gear 41.

Thus, the torque required at the input 61 to provide one unit of torque at the output 52 is the sum of that at the planet carrier 50 of the first epicyclic gear (6 units) with that on the common planet carrier 45 (34 units), namely 40. The gear ratio of this gear system is therefore 40, all within a space comfortably within the rotor 60.

In a fourth embodiment of the invention shown in Figure 4 of the accompanying drawings, equivalent features to those of the third embodiment have been assigned the same reference numerals, raised by 30.

In this embodiment the gear system is installed within a spindle 91 of the housing 83, the rotor 90 of the turbine being mounted over the spindle 91. The spindle 91 is again sufficiently large to accommodate this gear system.

In this embodiment:
- the input 92 is coupled to the annular gear 76 of a first face 72 of the second epicyclic gear 71 and to the planet carrier 87 of the third epicyclic gear 85;
- the annular gear 78 of a second face 73 of the second epicyclic gear 71 is coupled to the planet carrier 87 of the third epicyclic gear 85;
- the common planet carrier 75 of the second epicyclic gear 71 and the annular gear 81 of the first epicyclic gear 70 are both rotationally fixed relative to the housing 83;
- both sun gears 74, 76 of the second epicyclic gear 71 are coupled to the annular gear 88 of the third epicyclic gear 85;
- the sun gear 86 of the third epicyclic gear 85 is coupled to the planet carrier 80 of the first epicyclic gear 70 ; and
- the output 82 is coupled to the sun gear 70 of the first epicyclic gear 70, and onwards to the generator.

Again, this is a compact gear system that can achieve a gear ratio of 40 in very little space; the common planet carrier is fixed relative to the housing, so there is no need to introduce or extract torque at that point.

In a fifth embodiment of the invention shown in Figure 5 of the accompanying drawings, equivalent features to those of the fourth embodiment have been assigned the same reference numerals, raised by 30.

Again, this embodiment the gear system is installed within a spindle 121 of the housing 113, the rotor 120 of the turbine being mounted over the spindle 120. The spindle 121 is again sufficiently large to accommodate this gear system.

In this embodiment:
- the input 102 is coupled to the annular gear 106 of a first face 112 of the second epicyclic gear 101 and to the planet carrier 110 of the first epicyclic gear 100;
- the common planet carrier 105 of the second epicyclic gear 101 is fixed rotationally relative to the housing 113;
- both sun gears 104, 107 of the second epicyclic gear 101 are coupled to the planet carrier 117 of the third epicyclic gear 115;
- the annular gear 108 of a second face 113 of the second epicyclic gear 101 is coupled to the annular gear 118 of the third epicyclic gear 115 and to the planet carrier 110 of the first epicyclic gear 100;
- the sun gear 116 of the third epicyclic gear 115 is coupled to the annular gear 111 of the first epicyclic gear 100;
- the output 122 is coupled to the sun gear 109 of the first epicyclic gear 100 and onwards to the generator.

Again, this is a compact gear system that can achieve a gear ratio of 40 in very little space; the common planet carrier is fixed relative to the housing, so there is no need to introduce or extract torque at that point.

## Claims

1. A gear mounting, comprising a carrier (1) having two opposing faces (2, 3) and at least one pair of spindles (4), each pair of spindles (4) comprising a spindle (4) on each face (2, 3) of the carrier (1), the spindles (4) extending in opposing directions away from the carrier (1) along an axis (5), in which the spindles (4) are mounted on the carrier (1) so as to be capable of radial movement relative to the axis (5), **characterised in that** each spindle (4) comprises a tube (7) positioned along the axis (5), each tube (7) flexes in order to resist radial movement of the spindle (4), and in which there is provided a common inner member (10) for each pair which passes through the tube (7) of each spindle (4) and the carrier (1) and acts to compress the spindles (4) against the carrier (1).

2. The gear mounting of claim 1, in which the inner member (10) of each pair acts to axially compress the tubes (7) of each spindle (4) of that pair.

3. The gear mounting of claim 1 or claim 2, in which the inner member (10) is a tension bolt (10), with a housing (6) being provided for each spindle (4) and the tension bolt (10) having two ends; each end of the tension bolt (10) acting on the housing of one spindle (4) of its pair, typically at an end of the spindle (4) distal from the carrier (1).

4. The gear mounting of claim 3, in which the housing (6) will act to compress the tube (7).

5. The gear mounting of any preceding claim, in which the tube (7) has a radial profile comprising a narrower section axially between two wider ends.

6. The gear mounting of any preceding claim, in which each spindle (4) is provided with, or provides a seat (14) for, a bearing, with a gear (15) being provided on each bearing, arranged for rotation relative to the spindle (4) about the axis (5).

7. A dual epicyclic gear, comprising a gear mounting in accordance with any preceding claim, the carrier (1) of the gear mounting forming a common planet carrier (25) of the dual epicyclic gear, the dual epicyclic gear further comprising a sun gear (24, 27), an annular gear (26, 28) for each face (22, 23) of the carrier (25) and planet gears for each spindle of the gear mounting, in which for each face (22, 23) of the carrier (25), the sun gear (24, 27) and the annular gear (26, 28) both mesh with the planetary gears on that face (22, 23) of the carrier (25).

8. A gear system comprising a housing, an input (39), an output (32), a first epicyclic gear (20) and a second epicyclic gear (21), in which the first epicyclic gear (20) has a annular gear (31), a plurality of planetary gears each meshing with the annular gear (31) and supported by a common planet carrier (30) and a sun gear (29) meshing with each planetary gear and the second epicyclic gear (21) is a dual epicyclic gear in accordance with claim 7, in which the input (39) and the output (32) are each coupled to one of the first and second epicyclic gears (20, 21) and the first and second epicyclic gears (20, 21) are coupled to each other.

9. The gear system of claim 8, in which:
• the input (39) is coupled to the annular gear (26) of a first face (22) of the second epicyclic gear (21) and to the planet carrier (30) of the first epicyclic gear (20);
• the common planet carrier (25) of the second epicyclic gear (21) is fixed rotationally relative to the housing;
• the sun gears (24, 27) of the first (22) and a second face (23) of the second epicyclic gear (21) are both coupled to the annular gear (31) of the first epicyclic gear (20);
• the annular gear (28) of the second face (23) of the second epicyclic gear (21) is coupled to the planet carrier (30) of the first epicyclic gear (20); and
• the sun gear (29) of the first epicyclic gear (20) is coupled to the output (32).

10. The gear system of claim 8, in which there is a third epicyclic gear (55) coupled to the first and second epicyclic gears (40, 41).

11. The gear system of claim 10, in which:
• the input (61) is coupled to the planet carrier (50) of the first epicyclic gear (40) and to the common planet carrier (45) of the second epicyclic gear (41);
• the annular gear (51) of the first epicyclic gear (40) is coupled to the sun gear (56) of the third epicyclic gear (55);
• the planet carrier (57) of the third epicyclic gear (55) and the annular gear (46) of a first face (42) of the second epicyclic gear (41) are fixed rotationally relative to the housing (53);
• the annular gear (58) of the third epicyclic gear (55) is coupled to both sun gears (44, 47) of the second epicyclic gear (41);
• the annular gear (48) of a second face (43) of the second epicyclic gear (41) is coupled to the planet carrier (57) of the third epicyclic gear (55); and
• the output (52) is coupled to the sun gear (49) of the first epicyclic gear (40).

12. The gear system of claim 8, in which:
• the input (92) is coupled to the annular gear (76) of a first face (72) of the second epicyclic gear (71) and to the planet carrier (87) of the third epicyclic gear (85);
• the annular gear (78) of a second face (73) of the second epicyclic gear (71) is coupled to the planet carrier (87) of the third epicyclic gear (85);
• the common planet carrier (75) of the second epicyclic gear (71) and the annular gear (81) of the first epicyclic gear (70) are both rotationally fixed relative to the housing (83);
• both sun gears (74, 76) of the second epicyclic gear (71) are coupled to the annular gear (88) of the third epicyclic gear (85);
• the sun gear (86) of the third epicyclic gear (85) is coupled to the planet carrier (80) of the first epicyclic gear (70); and
• the output (82) is coupled to the sun gear (70) of the first epicyclic gear (70).

13. The gear system of claim 8, in which:
• the input (102) is coupled to the annular gear (106) of a first face (112) of the second epicyclic gear (101) and to the planet carrier (110) of the first epicyclic gear (100);
• the common planet carrier (105) of the second epicyclic gear (101) is fixed rotationally relative to the housing (113);
• both sun gears (104, 107) of the second epicyclic gear (101) are coupled to the planet carrier (117) of the third epicyclic gear (115);
• the annular gear (108) of a second face (113) of the second epicyclic gear (101) is coupled to the annular gear (118) of the third epicyclic gear (115) and to the planet carrier (110) of the first epicyclic gear (100);
• the sun gear (116) of the third epicyclic gear (115) is coupled to the annular gear (111) of the first epicyclic gear (100);
• the output (122) is coupled to the sun gear (109) of the first epicyclic gear (100).

14. A turbine, comprising a rotor and a gear system according to any of claims 8 to 13, in which the rotor is coupled to the input of the gear system, and wherein the turbine preferably comprises a generator couples to the output of the gear system.

15. The turbine of claim 14, provided with blades; the passage of fluid, such as air, over the blades exerting a torque on the rotor so as to cause it to turn.

## Patentansprüche

1. Getriebehalterung, die einen Träger (1) umfasst, der zwei gegenüberliegende Flächen (2, 3) und wenigstens ein Paar von Spindeln (4) aufweist, wobei jedes Paar von Spindeln (4) eine Spindel (4) auf jeder Fläche (2, 3) des Trägers (1) umfasst, wobei sich die Spindeln (4) in entgegengesetzte Richtungen weg von dem Träger (1) entlang einer Achse (5) erstrecken, wobei die Spindeln (4) an dem Träger (1) montiert sind, so dass sie zu einer radialen Bewegung relativ zur Achse (5) fähig sind, **dadurch gekennzeichnet, dass** jede Spindel (4) ein Rohr (7) umfasst, das entlang der Achse (5) positioniert ist, wobei sich jedes Rohr (7) biegt, um einer radialen Bewegung der Spindel (4) standzuhalten, und wobei ein gemeinsames inneres Element (10) für jedes Paar bereitgestellt ist, das durch das Rohr (7) einer jeden Spindel (4) und den Träger (1) verläuft und so wirkt, dass die Spindeln (4) gegen der Träger (1) zusammengedrückt werden.

2. Getriebehalterung nach Anspruch 1, wobei das innere Element (10) eines jeden Paars wirkt, um die Rohre (7) einer jeden Spindel (4) dieses Paars zusammenzudrücken.

3. Getriebehalterung nach Anspruch 1 oder Anspruch 2, wobei das innere Element (10) ein Zugbolzen (10) ist, wobei ein Gehäuse (6) für jede Spindel (4) vorgesehen ist, und der Zugbolzen (10) zwei Enden aufweist; wobei jedes Ende des Zugbolzens (10) auf das Gehäuse einer Spindel (4) ihres Paars wirkt, typischerweise an einem Ende der Spindel (4) distal des Trägers (1).

4. Getriebehalterung nach Anspruch 3, wobei das Gehäuse (6) so wirkt, dass es das Rohr (7) zusammendrückt.

5. Getriebehalterung nach einem der vorhergehenden Ansprüche, wobei das Rohr (7) ein radiales Profil aufweist, das einen engeren Abschnitt axial zwischen zwei weiteren Enden umfasst.

6. Getriebehalterung nach einem der vorhergehenden Ansprüche, wobei jede Spindel (4) mit einem Sitz (14) für ein Lager versehen ist oder diesen bereitstellt, wobei ein Zahnrad (15) an jedem Lager vorgesehen ist, das dazu angeordnet ist, sich relativ zur Spindel (4) um die Achse (5) zu drehen.

7. Doppeltes Umlaufrad, das eine Getriebehalterung nach einem der vorhergehenden Ansprüche umfasst, wobei der Träger (1) der Getriebehalterung einen gemeinsamen Planetenträger (25) des doppelten Umlaufrads bildet, wobei das doppelte Umlaufrad ferner ein Sonnenrad (24, 27), einen Zahnkranz (26, 28) für jede Fläche (22, 23) des Trägers (25) und Planetenräder für jede Spindel der Getriebehalterung umfasst, wobei für jede Fläche (22, 23) des Trägers (25) das Sonnenrad (24, 27) und der Zahnkranz (26, 28) beide in die Planetenräder auf dieser Fläche (22, 23) des Trägers (25) eingreifen.

8. Getriebesystem, das ein Gehäuse, einen Eingang (39), einen Ausgang (32), ein erstes Umlaufrad (20) und ein zweites Umlaufrad (21) umfasst, wobei das erste Umlaufrad (20) einen Zahnkranz (31) aufweist, wobei eine Mehrzahl von Planetenrädern jeweils in den Zahnkranz (31) eingreifen und von einem gemeinsamen Planetenträger (30) abgestützt sind, und ein Sonnenrad (29) in jedes Planetenrad eingreift und das zweite Umlaufrad (21) ein doppeltes Umlaufrad nach Anspruch 7 ist, wobei der Eingang (39) und der Ausgang (32) jeweils an entweder das erste oder das zweite Umlaufrad (20, 21) gekoppelt sind und das erste und das zweite Umlaufrad (20, 21) aneinander gekoppelt sind.

9. Getriebesystem nach Anspruch 8, wobei:
- der Eingang (39) an den Zahnkranz (26) einer ersten Fläche (22) des zweiten Umlaufrads (21) und an den Planetenträger (30) des ersten Umlaufrads (20) gekoppelt ist;
- der gemeinsame Planetenträger (25) des zweiten Umlaufrads (21) drehfest relativ zum Gehäuse ist;
- die Sonnenräder (24, 27) der ersten (22) und einer zweiten Fläche (23) des zweiten Umlaufrads (21) beide an den Zahnkranz (31) des ersten Umlaufrads (20) gekoppelt sind;
- der Zahnkranz (28) der zweiten Fläche (23) des zweiten Umlaufrads (21) an den Planetenträger (30) des ersten Umlaufrads (20) gekoppelt ist; und
- das Sonnenrad (29) des ersten Umlaufrads (20) an den Ausgang (32) gekoppelt ist.

10. Getriebesystem nach Anspruch 8, wobei es ein drittes Umlaufrad (55) gibt, das an das erste und das zweite Umlaufrad (40, 41) gekoppelt ist.

11. Getriebesystem nach Anspruch 10, wobei:
- der Eingang (61) an den Planetenträger (50) des ersten Umlaufrads (40) und an den gemeinsamen Planetenträger (45) des zweiten Umlaufrads (41) gekoppelt ist;
- der Zahnkranz (51) des ersten Umlaufrads (40) an das Sonnenrad (56) des dritten Umlaufrads (55) gekoppelt ist;
- der Planetenträger (57) des dritten Umlaufrads (55) und der Zahnkranz (46) einer ersten Fläche (42) des zweiten Umlaufrads (41) drehfest relativ zum Gehäuse (53) sind;
- der Zahnkranz (58) des dritten Umlaufrads (55) an beide Sonnenräder (44, 47) des zweiten Umlaufrads (41) gekoppelt ist;
- der Zahnkranz (48) einer zweiten Fläche (43) des zweiten Umlaufrads (41) an den Planetenträger (57) des dritten Umlaufrads (55) gekoppelt ist; und
- der Ausgang (52) an das Sonnenrad (49) des ersten Umlaufrads (40) gekoppelt ist.

12. Getriebesystem nach Anspruch 8, wobei:
- der Eingang (92) an den Zahnkranz (76) einer ersten Fläche (72) des zweiten Umlaufrads (71) und an den Planetenträger (87) des dritten Umlaufrads (85) gekoppelt ist;
- der Zahnkranz (78) einer zweiten Fläche (73) des zweiten Umlaufrads (71) an den Planetenträger (87) des dritten Umlaufrads (85) gekoppelt ist;
- der gemeinsame Planetenträger (75) des zweiten Umlaufrads (71) und der Zahnkranz (81) des ersten Umlaufrads (70) beide drehfest relativ zum Gehäuse (83) sind;
- beide Sonnenräder (74, 76) des zweiten Umlaufrads (71) an den Zahnkranz (88) des dritten Umlaufrads (85) gekoppelt sind;
- das Sonnenrad (86) des dritten Umlaufrads (85) an den Planetenträger (80) des ersten Umlaufrads (70) gekoppelt ist; und
- der Ausgang (82) an das Sonnenrad (70) des ersten Umlaufrads (70) gekoppelt ist.

13. Getriebesystem nach Anspruch 8, wobei:
- der Eingang (102) an den Zahnkranz (106) einer ersten Fläche (112) des zweiten Umlaufrads (101) und an den Planetenträger (110) des ersten Umlaufrads (100) gekoppelt ist;
- der gemeinsame Planetenträger (105) des zweiten Umlaufrads (101) drehfest relativ zum Gehäuse (113) ist;
- beide Sonnenräder (104, 107) des zweiten Umlaufrads (101) an den Planetenträger (117) des dritten Umlaufrads (115) gekoppelt sind;
- der Zahnkranz (108) einer zweiten Fläche (113) des zweiten Umlaufrads (101) an den Zahnkranz (118) des dritten Umlaufrads (115) und an den Planetenträger (110) des ersten Umlaufrads (100) gekoppelt ist;
- das Sonnenrad (116) des dritten Umlaufrads (115) an den Zahnkranz (111) des ersten Umlaufrads (100) gekoppelt ist;
- der Ausgang (122) an das Sonnenrad (109) des ersten Umlaufrads (100) gekoppelt ist.

14. Turbine, die einen Rotor und ein Getriebesystem nach einem der Ansprüche 8 bis 13 umfasst, wobei der Rotor an den Eingang des Getriebesystems gekoppelt ist, und wobei die Turbine bevorzugt einen Generator umfasst, der an den Ausgang des Getriebesystems gekoppelt ist.

15. Turbine nach Anspruch 14, die mit Schaufeln versehen ist; wobei der Durchfluss eines Fluids, wie beispielsweise Luft, über die Schaufeln ein Drehmoment auf den Rotor ausübt, um zu verursachen, dass er sich dreht.

## Revendications

1. Montage d'engrenage, comprenant un support (1) ayant deux faces opposées (2, 3) et au moins une paire de broches (4), chaque paire de broches (4) comprenant une broche (4) sur chaque face (2, 3) du support (1), les broches (4) s'étendant dans des directions opposées à l'écart du support (1) le long d'un axe (5), dans lequel les broches (4) sont montées sur le support (1) de manière à être capable d'un mouvement radial par rapport à l'axe (5), **caractérisé en ce que** chaque broche (4) comprend un tube (7) positionné le long de l'axe (5), chaque tube (7) se fléchit pour résister au mouvement radial de la broche (4), et dans lequel il est prévu un élément intérieur commun (10) pour chaque paire qui traverse le tube (7) de chaque broche (4) et le support (1), et agit pour comprimer les broches (4) contre le support (1).

2. Montage d'engrenage selon la revendication 1, dans lequel l'élément intérieur (10) de chaque paire agit pour comprimer axialement les tubes (7) de chaque broche (4) de cette paire.

3. Montage d'engrenage selon la revendication 1 ou la revendication 2, dans lequel l'élément intérieur (10) est un boulon de tension (10), un boîtier (6) étant prévu pour chaque broche (4) et le boulon de tension (10) ayant deux extrémités ; chaque extrémité du boulon de tension (10) agissant sur le logement d'une broche (4) de sa paire, typiquement à une extrémité de la broche (4) de manière distale à partir du support (1).

4. Montage d'engrenage selon la revendication 3, dans lequel le boîtier (6) agira pour comprimer le tube (7).

5. Montage d'engrenage selon une quelconque revendication précédente, dans lequel le tube (7) a un profil radial comprenant une section plus étroite axialement entre deux extrémités plus larges.

6. Montage d'engrenage selon une quelconque revendication précédente, dans lequel chaque broche (4) est pourvue d'un palier ou fournit un siège (14) pour un palier, un engrenage (15) étant prévu sur chaque palier, agencé pour une rotation par rapport à la broche (4) autour de l'axe (5).

7. Engrenage épicycloïdal double, comprenant un montage d'engrenage selon une quelconque revendication précédente, le support (1) du montage d'engrenage formant un porte-satellites commun (25) de l'engrenage épicycloïdal double, l'engrenage épicycloïdal double comprenant en outre un engrenage solaire (24, 27), un engrenage annulaire (26, 28) pour chaque face (22, 23) du support (25) et des engrenages planétaires pour chaque broche du support d'engrenage, dans lequel, pour chaque face (22, 23) du support (25), l'engrenage solaire (24, 27) et l'engrenage annulaire (26, 28) s'engrènent tous les deux avec les engrenages planétaires sur cette face (22, 23) du support (25).

8. Système d'engrenage comprenant un boîtier, une entrée (39), une sortie (32), un premier engrenage épicycloïdal (20) et un deuxième engrenage épicycloïdal (21), dans lequel le premier engrenage épicycloïdal (20) a un engrenage annulaire (31), une pluralité d'engrenages planétaires s'engrenant chacun avec l'engrenage annulaire (31) et supportés par un porte-satellites commun (30) et un engrenage solaire (29) s'engrenant avec chaque engrenage planétaire et le deuxième engrenage épicycloïdal (21) est un double engrenage épicycloïdal selon la revendication 7, dans lequel l'entrée (39) et la sortie (32) sont chacune couplées à l'un des premier et deuxième engrenages épicycloïdaux (20, 21) et les premier et deuxième engrenages épicycloïdaux (20, 21) sont couplés les uns aux autres.

9. Système d'engrenage selon la revendication 8, dans lequel :
• l'entrée (39) est couplée à l'engrenage annulaire (26) d'une première face (22) du deuxième engrenage épicycloïdal (21) et au porte-satellites (30) du premier engrenage épicycloïdal (20) ;
• le porte-satellites commun (25) du deuxième engrenage épicycloïdal (21) est fixe en rotation par rapport au boîtier ;
• les engrenages solaires (24, 27) de la première (22) et d'une seconde face (23) du deuxième engrenage épicycloïdal (21) sont tous les deux couplés à l'engrenage annulaire (31) du premier engrenage épicycloïdal (20) ;
• l'engrenage annulaire (28) de la seconde face (23) du deuxième engrenage épicycloïdal (21) est couplé au porte-satellites (30) du premier engrenage épicycloïdal (20) ; et
• l'engrenage solaire (29) du premier engrenage épicycloïdal (20) est couplé à la sortie (32).

10. Système d'engrenage selon la revendication 8, dans lequel il y a un troisième engrenage épicycloïdal (55) couplé aux premier et deuxième engrenages épicycloïdaux (40, 41).

11. Système d'engrenage selon la revendication 10, dans lequel :
• l'entrée (61) est couplée à l'engrenage planétaire (50) du premier engrenage épicycloïdal (40) et au porte-satellites (45) commun du deuxième engrenage épicycloïdal (41) ;
• l'engrenage annulaire (51) du premier engrenage épicycloïdal (40) est couplé à l'engrenage solaire (56) du troisième engrenage épicycloïdal (55) ;
• le porte-satellites (57) du troisième engrenage épicycloïdal (55) et l'engrenage annulaire (46) d'une première face (42) du deuxième engrenage épicycloïdal (41) sont fixes en rotation par rapport au boîtier (53) ;
• l'engrenage annulaire (58) du troisième engrenage épicycloïdal (55) est couplé aux deux engrenages solaires (44, 47) du deuxième engrenage épicycloïdal (41) ;
• l'engrenage annulaire (48) d'une seconde face (43) du deuxième engrenage épicycloïdal (41) est couplé au porte-satellites (57) du troisième engrenage épicycloïdal (55) ; et
• la sortie (52) est couplée à l'engrenage solaire (49) du premier engrenage épicycloïdal (40).

12. Système d'engrenage selon la revendication 8, dans lequel :
• l'entrée (92) est couplée à l'engrenage annulaire (76) d'une première face (72) du deuxième engrenage épicycloïdal (71) et au porte-satellites (87) du troisième engrenage épicycloïdal (85) ;
• l'engrenage annulaire (78) d'une seconde face (73) du deuxième engrenage épicycloïdal (71) est couplé au porte-satellites (87) du troisième engrenage épicycloïdal (85) ;
• le porte-satellites (75) commun du deuxième engrenage épicycloïdal (71) et l'engrenage annulaire (81) du premier engrenage épicycloïdal (70) sont tous les deux fixes en rotation par rapport au boîtier (83) ;
• les deux engrenages annulaires (74, 76) du deuxième engrenage épicycloïdal (71) sont couplés à l'engrenage annulaire (88) du troisième engrenage épicycloïdal (85) ;
• l'engrenage annulaire (86) du troisième engrenage épicycloïdal (85) est couplé au porte-satellites (80) du premier engrenage épicycloïdal (70) ; et
• la sortie (82) est couplée à l'engrenage solaire (70) du premier engrenage épicycloïdal (70).

13. Système d'engrenage selon la revendication 8, dans lequel :
• l'entrée (102) est couplée à l'engrenage annulaire (106) d'une première face (112) du deuxième engrenage épicycloïdal (101) et au porte-satellites (110) du premier engrenage épicycloïdal (100) ;
• le porte-satellites commun (105) du deuxième engrenage épicycloïdal (101) est fixe en rotation par rapport au boîtier (113) ;
• les deux engrenages annulaires (104, 107) du deuxième engrenage épicycloïdal (101) sont couplés au porte-satellites (117) du troisième engrenage épicycloïdal (115) ;
• l'engrenage annulaire (108) d'une seconde face (113) du deuxième engrenage épicycloïdal (101) est couplé à l'engrenage annulaire (118) du troisième engrenage épicycloïdal (115) et au porte-satellites (110) du premier engrenage épicycloïdal (100) ;
• l'engrenage solaire (116) du troisième engrenage épicycloïdal (115) est couplé à l'engrenage annulaire (111) du premier engrenage épicycloïdal (100) ;
• la sortie (122) est couplée à l'engrenage solaire (109) du premier engrenage épicycloïdal (100).

14. Turbine, comprenant un rotor et un système d'engrenages selon l'une quelconque des revendications 8 à 13, dans laquelle le rotor est couplé à l'entrée du système d'engrenages, et dans laquelle la turbine comprend de préférence un générateur couplé à la sortie du système d'engrenages.

15. Turbine selon la revendication 14, munie d'aubes ; le passage de fluide, tel que de l'air, sur les pales exerçant un couple sur le rotor de manière à l'amener à tourner.
